# EUROPÄISCHE PATENTSCHRIFT

(11) **EP 1 478 483 B1**
(45) Veröffentlichungstag und Bekanntmachung des Hinweises auf die Patenterteilung: **04.05.2011**
(21) Anmeldenummer: 03706466.4
(22) Anmeldetag: 10.02.2003
(51) Int. Cl.: B23B 31/11

(54) **WERKZEUGVERBINDUNG**
TOOL CONNECTION
LIAISON ENTRE DEUX PARTIES D'OUTIL

(30) Priorität: 12.02.2002 DE 10205635
(43) Veröffentlichungstag der Anmeldung: 24.11.2004
(73) Patentinhaber: Wolf, Horst, 66539 Neunkirchen-Kohlhof (DE)
(72) Erfinder: Schymonski, Stephan, 56204 Hillscheid (DE)
(86) Internationale Anmeldenummer: PCT/EP2003/001286
(87) Internationale Veröffentlichungsnummer: WO 2003/068436

(56) Entgegenhaltungen:
- DE-A- 2 020 951
- DE-A- 4 312 597
- US-A- 1 407 335
- US-A- 2 079 692
- US-A- 5 971 670

## Beschreibung

Die Erfindung betrifft eine Werkzeugverbindung entsprechend dem Oberbegriff des Anspruches 1.

### Stand der Technik

Im Zusammenhang mit Werkzeugmaschinen, beispielsweise bei Bohrmaschinen, ist es seit langem bekannt, zur Aufnahme des Werkzeuges in der Werkzeugspindel - oder in einem mit der Werkzeugspindel verbindbaren Adapter - einen sogenannten Paßkonus zu verwenden. Dieser Paßkonus übernimmt bei der Übertragung der Drehbewegung von der Werkzeugspindel auf das Werkzeug bzw. den Adapter die Zentrierung und axiale Fixierung des Werkzeuges bzw. des Adapter in/an der Werkzeugspindel bzw. am Adapter.

Bei Fräsmaschinen, bei denen relativ kleine, aus Hartmetall bestehende Fräsköpfe mit einem Durchmesser in der Größenordnung von etwa 5 bis 20 mm austauschbar mit einem aus Stahl bestehenden Frässchaft verbindbar sind, ist es bekannt, das dem Arbeitsbereich des - einstückig hergestellten - Fräskopfes abgekehrte, stopfenartige Ende des Fräskopfes nach Art eines Paßkonus mit einer Paßfläche auszubilden, der eine korrespondierende Paßfläche am buchsenartig ausgebildeten Ende des Frässchaftes zugeordnet ist. Eine derartige Werkzeugverbindung ist der DE-3875534-T2 zu entnehmen.

Bei der Werkzeugverbindung nach der DE-3875534-T2 ist das erwähnte stopfenartige Ende des Werkzeug- oder Fräskopfes mit einem konischen Umfangsteil versehen, dem ein korrespondierender konischer Sitz des Werkzeug- bzw. Frässchaftes zugeordnet ist. Das konische Umfangsteil des Werkzeug- bzw. Fräskopfes läuft in hakenartige Mittel aus, die mit hakenartigen Mitteln einer im Werkzeug- bzw. Frässchaft einstellbar gelagerten Sicherungsschraube korrespondieren, deren Gewinde einen Drehsinn hat, der dem Drehsinn des Werkzeuges entspricht. Die genannten hakenartigen Mittel des Werkzeug- bzw. Fräskopfes und des Werkzeug- bzw. Frässchaftes werden dabei von einer Kombination aus Elementen gebildet, die dort als "Feder" bzw. "Ausnehmung" bezeichnet sind.

Bei dieser bekannten Werkzeugverbindung erfolgen das Übertragen der Drehbewegung vom Werkzeugschaft auf den Werkzeugkopf und die Zentrierung des Werkzeugkopfes und dessen axiale Fixierung im Werkzeugschaft ausschließlich über das erwähnte konische Umfangsteil und den erwähnten konischen Sitz, was im Hinblick auf möglichst gute Rundlaufgenauigkeit grundsätzlich von Vorteil ist, - im Gegensatz zu Lösungen, bei denen sich das mehr oder weniger vorhandene Spiel bzw. die Ungenauigkeiten der einzelnen, in größerer Anzahl vorhandenen Elemente zu unakzeptablen Werten aufsummieren.

Nachteilig bei der Lösung nach der DE-3875534-T2 ist jedoch, daß diese relativ kompliziert im Aufbau und teuer in der Fertigung ist. Überdies wird zum Austausch eines Werkzeug- bzw. Fräskopfes wegen der Verwendung eines üblichen, als metrisches Gewinde oder Feingewinde ausgeführten Gewindes für die erwähnte Sicherungsschraube erhebliche Zeit benötigt, was im Hinblick auf rationelle Fertigungsweise ebenfalls nachteilig ist. Und schließlich wird der das erwähnte konische Umfangsteil aufweisende Schaft des Werkzeug- bzw. Fräskopfes durch die erwähnte "Feder"-"Ausnehmung"-Kombination an Werkzeugkopf und Werkzeugschaft erheblich verlängert, was also auch wegen dieser Verlängerung an sich zu einer weiteren Kostenerhöhung dieses einstückig aus Hartmetall gefertigten Fräskopfes führt. Die erwähnte "Feder"-"Ausnehmung"-Kombination bedeutet eine erhebliche Schwächung des Querschnitts des unter relativ hoher Anzugskraft stehenden Schaftes des Werkzeug- bzw. Fräskopfes gerade an seiner schmalsten Stelle, überdies auch noch verbunden mit einer gewissen Kerbwirkung im Bereich dieser "Feder" bzw. "Ausnehmung".

Schließlich ist auch von Nachteil für einen sicheren, festen Sitz und leichte Austauschbarkeit des Fräskopfes am Frässchaft, daß die genannte Sicherungsschraube relativ weit entfernt ist vom Paßkonus, wodurch sich die unter Zugspannung erfolgende Streckung des (Stahl-)Materials der Sicherungsschraube ungünstig bemerkbar macht.

Um im Fall der Lösung nach der DE-3875534-T2 den Fräskopf in den Frässchaft einsetzen bzw. von diesem entnehmen zu können, muß im übrigen ein spezielles Anzugswerkzeug verwendet werden, und zwar in einer vorgegebenen Weise, um eine etwaige Beschädigung des Fräskopfes zu vermeiden.

Die EP-0638384-A1 beschreibt einen durch ein pulvermetallurgisches Verfahren einstückig hergestellten Schneideinsatz eines Werkzeuges. Dieser Schneideinsatz weist eine konische Paßfläche auf, die durch Schleifen hergestellt wird und die für die Klemm- und Blockierfunktion des Schneideinsatzes im entsprechend ausgeformten Werkzeugschaft sorgen soll. Im Anschluß an die erwähnte konische Paßfläche ist auf einer Verlängerung des Schneideinsatzes ein Gewinde vorgesehen, mit dessen Hilfe der Schneideinsatz im Werkzeugschaft mittels eines Schraubenschlüssels befestigt werden kann. - Wegen des besonderen Herstellungsverfahrens weist dieser Schneideinsatz ein nur fragmentartig ausgeführtes Gewinde auf, das wegen seiner Anordnung auf einer gesonderten, zapfenartigen Verlängerung aus mehreren Gründen in erheblichem Maße bruchgefährdet ist.

Ferner ist auch schon vorgeschlagen worden (WO-96/06702-A1), ein der Verbindung eines aus Hartmetall bestehenden Werkzeugkopfes mit einem Werkzeugschaft dienendes Gewinde auf einer Verlängerung des Werkzeugkopfes vorzusehen, wobei diese Verlängerung entweder zylindrisch oder aber auch konisch ausgeführt sein können soll. Dabei soll jede Art bekannter Gewinde für die Verbindungsaufgabe grundsätzlich geeignet sein. Wegen des hier unspezifisch ausgeführten - eben irgendwie gearteten - Gewindes und also mit dem einem Gewinde nun einmal eigenen, mehr oder weniger vorhandenen Spiel (in allen drei räumlichen Dimensionen!) ist keine optimale Rundlaufgenauigkeit des Werkzeuges und insbesondere keine Langzeit- und Austauschstabilität der Passungsgenauigkeit dieser Werkzeugverbindung erzielbar. Darüberhinaus ist das zum Herstellen dieses Werkzeugkopfes vorgeschlagene Spritzgieß-Verfahren mit anschließendem Entfernen des als Trägermaterial für die Hartmetall-Pulver-Mischung dienenden Polymers aufwendig, kompliziert und teuer und kann deshalb nicht annähernd eine einigermaßen zufriedenstellende Produktion und Funktion der so geschaffenen Werkzeugverbindung garantieren. - Im übrigen weist der Werkzeugkopf bei dieser Lösung Absätze auf, die eine gewisse - zusätzlich als wohl notwendig erachtete - seitliche Führung des Werkzeugkopfes im Werkzeugschaft bewirken sollen (obwohl eine derartige konstruktive Lösung prinzipiell ein gewisses Spiel aufweisen muß, damit der Werkzeugkopf - der Austauschfunktion entsprechend - überhaupt genügend leicht in den Werkzeugschaft eingesetzt bzw. aus diesem entnommen werden kann).

Nachdem die in der vorgenannten WO-96/06702-A1 gezeigte, einer kraft- und formschlüssigen Verbindung dienende Profilierung geometrisch auf einem Kegelmantel liegt, und nachdem die Definition für ein Gewinde die Profilierung einer Schraubenlinie ist, welche ihrerseits durch eine auf einen Zylinder vorbestimmten Durchmessers gewickelte, einen vorbestimmten Steigungswinkel aufweisende Gerade gebildet ist, kann die vorstehend diskutierte Lösung zur WO-96/06702-A1 nicht als ,Gewinde' bezeichnet werden. Eher zutreffend könnte eine Bezeichnung als 'spiralwendelartige Profilierung' akzeptabel erscheinen.

Die WO-01/85371-A1 zeigt und beschreibt eine Werkzeugverbindung, bei der ebenfalls relativ kleine, aus Hartmetall bestehende und einstückig hergestellte Fräsköpfe mit einem Durchmesser in der Größenordnung von etwa 5 bis 20 mm austauschbar mit einem aus Stahl bestehenden Frässchaft verbindbar sind und bei der das dem Arbeitsbereich des Fräskopfes abgekehrte, stopfenartige, einen zylindrischen Kern enthaltende Ende des Fräskopfes ein speziell konfiguriertes, durch Schleifen hergestelltes Trapezgewinde aufweist, das am dem Arbeitsbereich (den Schneiden etc.) des Fräskopfes zugekehrten Ende in eine kegelstumpfförmig ausgebildete Fläche übergeht, die zur Längsachse des Fräskopfes einen Winkel in der Größenordnung von ca. 3° einschließt. Mit dieser Fläche des Fräskopfes korrespondiert das buchsenartig ausgebildete Ende des Frässchaftes in der Weise, daß dieses Ende des Frässchaftes entweder eine kegelstumpfförmige Gegenfläche mit derselben Neigung von ca. 3° zu deren Längsachse aufweist, oder aber eine davon in der Größenordnung von ca. 0,25° abweichende, geringere Neigung aufweist. Im übrigen weisen Fräskopf und Frässchaft senkrecht zur jeweiligen Längsachse verlaufende ringförmige Anlageflächen auf. - Zum Einsetzen oder Entnehmen des Fräskopfes vom Frässchaft dient ein gewöhnlicher Schraubenschlüssel, der an entsprechende Abflachungen des Fräskopfes angesetzt wird.

Im Fall der Lösung nach der WO-O1/85371-A1 werden die Zentrierung und axiale Fixierung des Fräskopfes im/am Frässchaft also teilweise durch die erwähnten kegelstumpfförmigen Flächen bewirkt, während die axiale Fixierung im übrigen - zu einem weiteren und unbestimmten Anteil - von den erwähnten ringförmigen Anlageflächen bewirkt wird. Allerdings ist nicht zu verkennen, daß sich überdies auch das erwähnte Trapezgewinde - eben wegen seines trapezförmigen Querschnitts, der eine gewisse, schräg zur Basis des Gewindes verlaufende Flankenneigung einschließt - in einem den Sitz des Fräskopfes am Frässchaft beeinflussenden - und zwar unkontrolliert oder unkontrollierbar beeinflussenden - Sinne auswirkt.

Bei der Werkzeugverbindung nach der WO-01/85 371-A1 kann das dem Arbeitsbereich abgekehrte Ende des Fräskopfes zwar relativ kurz ausgeführt werden. Die Anlage- und Sitzbedingungen des Fräskopfes am Frässchaft sind bei dieser Werkzeugverbindung jedoch nicht exakt zwangsläufig vorherbestimmt und können es bei dieser Konstruktion auch nicht sein. Dies deswegen, weil der Sitz der beiden Elemente (Fräskopf und Früsschaft) durch ein mehr oder weniger "gewaltsames" (siehe Beschreibung zu dieser Druckschrift, Seite 11, Zeilen 17 bis 20) Anziehen des Fräskopfes gegenüber dem Frässchaft erfolgt/erfolgen muß unter einem gewissen Quetschen/Würgen im Bereich der erwähnten kegelstumpfförmigen Flächen und eines damit einhergehenden, mehr oder weniger und jedenfalls ebenfalls unkontrolliert erfolgenden Aufweitens des betreffenden Endbereiches des Frässchaftes. Abgesehen von den die Rundlaufgenauigkeit der Werkzeugverbindung in negativer Weise beeinflussenden Auswirkungen der Gesamt-Verbindung des vorstehend angesprochenen Bereiches dieser Werkzeugverbindung wirkt sich überdies aber auch das die Anzugskraft aufnehmende und übertragende Trapezgewinde - wegen seiner zum (zylindrischen) Gewindekern hin schräg verlaufenden Flanken - in nicht kontrollierbarer Weise auf den letztlich vom Fräskopf im Frässchaft eingenommenen Sitz aus. - In diesem Zusammenhang sei auf die US-2328602-A1 hingewiesen, in der die Probleme, die durch die Form des für eine Verbindung benutzten Befestigungsgewindes bei einer Werkzeugverbindung entstehen oder entstehen können, detailliert erläutert sind.

Ein weiterer Nachteil der Werkzeugverbindungslösung nach der WO-01/85371-A1 besteht darin, daß der Fräskopf wegen der relativ dünnen Wandung der sich über eine größere Länge erstreckenden, hülsenartigen Aufnahme des Frässchaftes schon bei relativ geringen, quer zur Werkzeuglängsachse gerichteten Kräften leicht ausbrechen kann.

### Aufgabe

Der vorliegenden Erfindung liegt die Aufgabe zugrunde, die Nachteile der bekannten Lösungen für Werkzeugverbindungen der zur Rede stehenden Art zu beheben. Insbesondere soll die Werkzeugverbindung geeignet sein und bewirken, daß einteilig aus Hartmetall bestehende Fräsköpfe mit präzise vorherbestimmtem Sitz und damit bestmöglicher Rundlaufgenauigkeit leicht austauschbar mit einem Frässchaft zu einer sicheren Werkzeugverbindung mit bestmöglicher Rundlaufgenauigkeit verbunden werden können, daß ferner die Werkzeugverbindung kostengünstig herstellbar ist, und daß die Werkzeugverbindung schließlich so wenig wie möglich bruchgefährdet ist, insbesondere im Hinblick auf Querkräfte.

### Lösung

Zur Lösung der vorstehend umrissenen Aufgabe wird die Erfindung entsprechend dem kennzeichnenden Teil des Anspruches 1 vorgeschlagen.

Vorteilhafte und/oder zweckmäßige Ausgestaltungen der Erfindung sind in den Ansprüchen 2 bis 9 angegeben.

### Vorteile

Mit der erfindungsgemäßen Werkzeugverbindung ist es möglich, einen präzise vorherbestimmten Sitz des Fräskopfes im Frässchaft zu erzielen mit der Folge bestmöglicher Rundlaufgenauigkeit des aus einem aus Hartmetall gefertigten Fräskopf und einem aus Stahl bestehenden Frässchaft bestehenden Werkzeuges. Die erfindungsgemäße Werkzeugverbindung ist relativ kostengünstig herzustellen und wegen ihrer Formgestaltung - insbesondere im Hinblick auf den Fräskopf - wenig bruchgefährdet.

Eine bevorzugte Ausfiihrungsform der erfindungsgemäßen Werkzeugverbindung nennt Anspruch 2. Im Fall dieser Werkzeugverbindung kann die - in der Profilierung des betreffenden Bereiches des Werkzeugkopfes also vertieft liegende - Paßfläche des Werkzeugkopfes auf relativ einfache Weise durch Schleifen präzise hergestellt werden; die korrespondierende Profilierung des Werkzeugschaftes wird hierbei mittels eines Drehmeißels oder eines einem Gewindeschneider ähnlichen Schneidwerkzeuges hergestellt, dessen einzelne Schneiden auf einem Konus liegen, dessen Länge etwa der Länge der axialen Erstreckung der Profilierung des Werkzeugschaftes entspricht. - Allerdings ist es auch möglich, die Anordnung der Paßflächen von Werkzeugkopf und Werkzeugschaft umgekehrt vorzunehmen, so daß sich also die Paßfläche des Werkzeugkopfes auf der erhabenen Seite der betreffenden Profilierung befindet, während die Paßfläche des Werkzeugschaftes vertieft in der korrespondierenden Profilierung des Werkzeugschaftes liegt.

Zwei weitere, grundsätzlich mögliche Ausgestaltungen der durch die erwähnten Profilierungen gebildeten Paßflächen sind in den Ansprüchen 3 und 4 angegeben. Hierzu ist zu bemerken, daß eine fragmentartige Ausgestaltung der die Paßflächen von Werkzeugkopf bzw. Werkzeugschaft bildenden Profilierungen den Vorteil eines eventuell noch schneller und leichter durchführbaren Austausches des Werkzeugkopfes bietet.

Den weiteren Vorteil einer gewissen, das Einsetzen eines Werkzeugkopfes in den Werkzeugschaft erleichternden Vor-Führung bietet die weitere Ausgestaltung der Erfindung nach Maßgabe des Anspruches 5, wobei eine Ausführung gemäß Anspruch 6 diesem Zweck besonders dienlich ist.

Im Hinblick auf einen leicht und mit einfachen Mitteln durchzuführenden Austausch eines Werkzeugkopfes ist dieser zweckmäßig entsprechend dem Vorschlag nach Anspruch 7 weiter ausgestaltet.

Eine bevorzugte Lösung für die Bildung der am Werkzeugkopf vorgesehenen Paßfläche ist in Anspruch 8 angegeben.

Die spiralwendelartig im Werkzeugkopf bzw. Werkzeugschaft verlaufenden Paßflächen können im übrigen gemäß der bevorzugten Lösung nach Anspruch 9 eingängig ausgeführt sein, oder aber auch mehrgängig, insbesondere zweigängig ausgeführt sein.

### Erläuterung eines Ausführungsbeispiels

Anhand der Fig. 1 bis 8 der Zeichnung wird die Erfindung im folgenden an einem Ausführungsbeispiel näher erläutert.

Es zeigen
- Fig. 1: einen Fräskopf schematisch und in perspektivischer Darstellung,
- Fig. 2: das der Werkzeugverbindung mit dem Fräskopf nach Fig. 1 dienende Ende eines Frässchaftes schematisch und in perspektivi- scher Darstellung,
- Fig. 3: den Frässchaft nach Fig. 2 von der Antriebsseite aus gesehehen und in der Aufsicht,
- Fig. 4: den Fräskopf nach Fig. 1 von der Antriebsseite aus gesehen und in der Aufsicht,
- Fig. 5: den Frässchaft nach den Fig. 2 und 3 im Schnitt entsprechend Schnittlinie V-V in Fig. 3,
- Fig. 6: den Fräskopf nach den Fig. 1 und 4 im Schnitt entsprechend Schnittlinie VI-VI in Fig. 4,
- Fig. 7: die aus dem Fräskopf nach den Fig. 1, 4 und 6 sowie dem Frässchaft nach den Fig. 2, 3 und 5 bestehende Werkzeugverbindung in der Seitenansicht, und
- Fig. 8: einen Ausschnitt der aus dem Fräskopf nach den Fig. 1, 4 und 6 sowie dem Frässchaft nach den Fig. 2, 3 und 5 bestehenden Werk- zeugverbindung gemäß Fig. 7 in größerem Maßstab und im Schnitt.

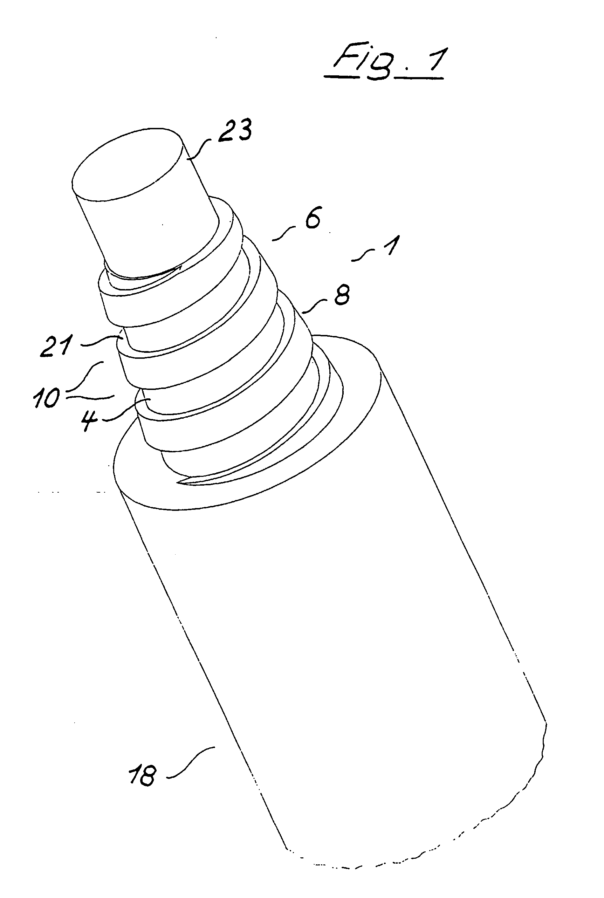

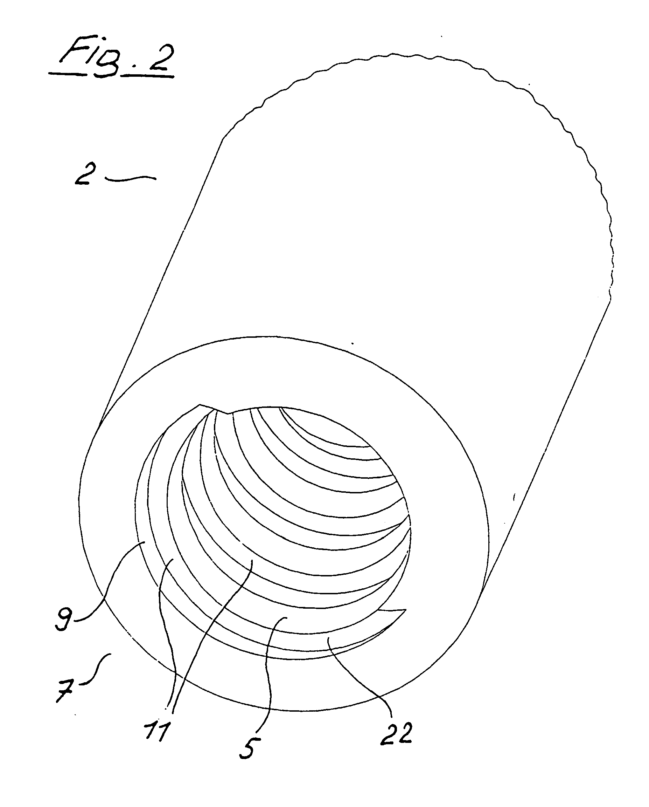

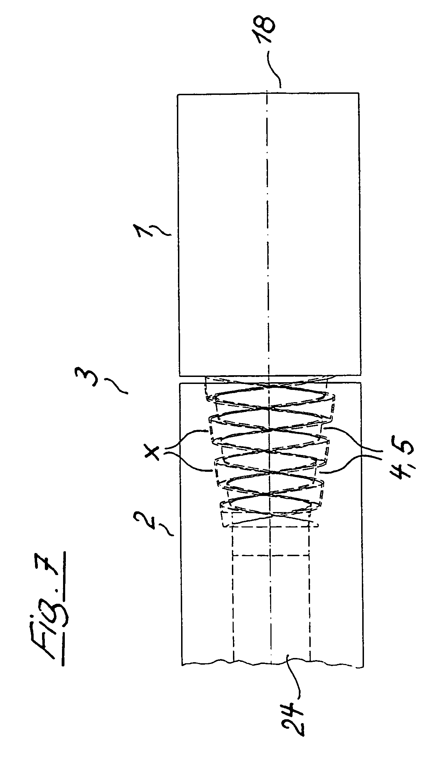

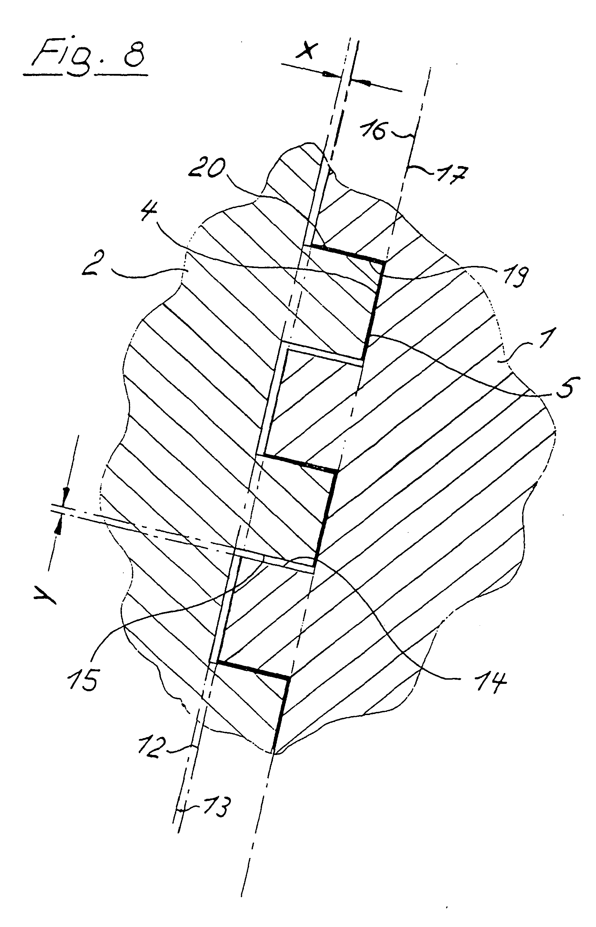

Die Fig. 1, 4 und 6 der Zeichnung zeigen einen einstückig aus Hartmetall oder einem ähnlichen, harten und relativ spröden Material bestehenden Fräskopf 1, dem ein in den Fig. 2, 3 und 5 gezeigter, aus Stahl bestehender Frässchaft 2 zugeordnet ist. Fräskopf 1 und Frässchaft 2 bilden im zusammengesetzten Zustand (siehe Fig. 7 und 8) eine Werkzeugverbindung 3.

Die Werkzeugverbindung 3 ist dadurch charakterisiert, daß am Fräskopf 1 bzw. am Frässchaft 2 jeweils auf einer Kegelmantelfläche 16 bzw. 17 liegende Paßflächen 4, 5 gebildet sind, die im Verbindungszustand von Fräskopf 1 und Frässchaft 2 (siehe Fig. 7 und 8) nach Art eines an sich bekannten Paßkonus die Zentrierung und axiale Fixierung des Fräskopfes 1 im Frässchaft 2 übernehmen.

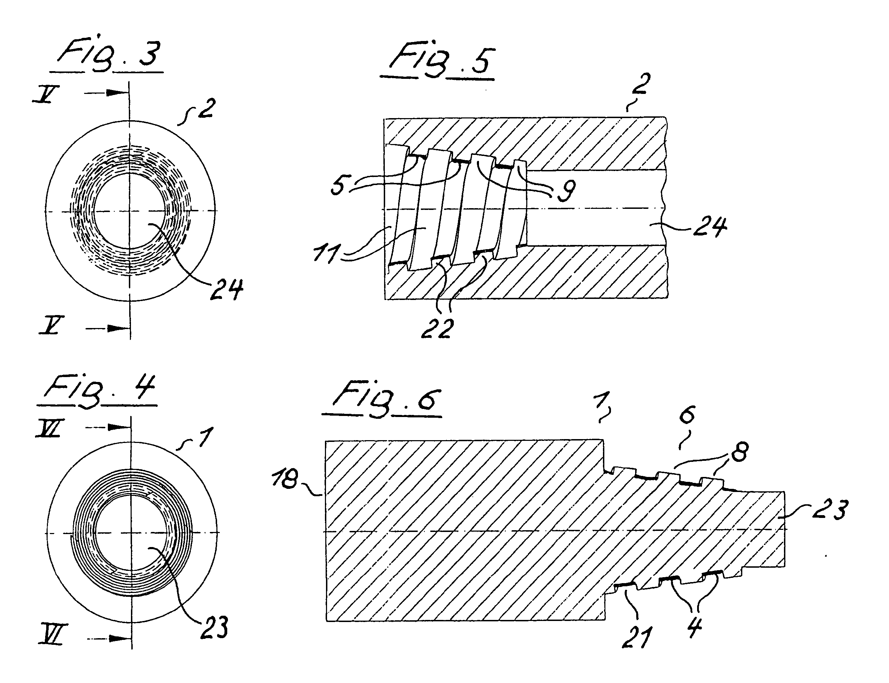

Die erwähnten, für die Passung - also für die Zentrierung und die axiale Fixierung - sorgenden Paßflächen 4, 5 sind in den Fig. 5, 6 und 8 durch Linienbereiche mit größerer Liniendicke dargestellt.

Die Paßflächen 4, 5 von Fräskopf 1 bzw. Frässchaft 2 sind jeweils spiralwendelartig verlaufend am dem Arbeitsbereich 18 des Fräskopfes 1 abgekehrten, mit 6 bezeichneten stopfenartigen Ende des Fräskopfes 1 bzw. im mit 7 bezeichneten buchsenartigen Ende des Frässchaftes 2 vorgesehen. Dabei schließen die Paßflächen 4, 5 im Querschnitt zumindest im wesentlichen rechteckige, feder- bzw. nutartig ausgebildete Bereiche 8 bzw. 9 ein, deren äußere bzw. innere Begrenzungsflächen - ähnlich wie auch die auf der Kegelmantelfläche 16 bzw. 17 liegenden Paßflächen 4 und 5 - auf geometrisch ähnlichen Kegelmantelflächen 12 bzw. 13 liegen.

Im Fall der in der Zeichnung dargestellten, bevorzugten Lösung wird die Paßfläche 4 durch die Fußfläche einer Nut 21 gebildet, während die Paßfläche 5 durch die Kopffläche einer Feder 22 gebildet wird.

Die Bemessung der die Paßfläche 4 und den von der Paßfläche 4 eingeschlossenen federartigen Bereich 8 einerseits bzw. der die Paßfläche 5 und den von der Paßfläche 5 eingeschlossenen nutartigen Bereich 9 andererseits umfassenden, mit 10 bzw. 11 bezeichneten Profilierung des stopfenartigen Endes 6 des Fräskopfes 1 bzw. des buchsenartigen Endes 7 des Frässchaftes 2 ist dabei jeweils derart getroffen, daß im durch eine entsprechende Dreh- und Axialbewegung des Fräskopfes 1 relativ zum Frässchaft 2 erreichbaren Verbindungszustand (siehe Fig. 7 und 8) von Fräskopf 1 und Frässchaft 2 ein sich in etwa radialer, quer zur Kegelmantelfläche 12 bzw. 13 verlaufenden Richtung erstreckender gewisser, relativ geringer Abstand x von beispielsweise 0,1 bis 0,3 mm zwischen den erwähnten, sich jeweils einander gegenüberliegenden feder- bzw. nutartig ausgebildeten Bereichen 8 bzw. 9 von Fräskopf 1 und Frässchaft 2 verbleibt.

Außerdem verbleibt im Verbindungszustand von Fräskopf 1 und Frässchaft 2 auch ein gewisser, relativ geringer Abstand y von beispielsweise 0,1 mm bis 0,3 mm zwischen den durch die Anzugskraft - die Verbindungskraft - unbelastet bleibenden, mit 14 bzw. 15 bezeichneten, senkrecht zur betreffenden Kegelmantelfläche 12 bzw. 13 verlaufenden Flanken der Profilierung 10 bzw. 11 des Fräskopfes 1 und des Frässchaftes 2.

Damit ist klar, daß der Sitz - also die Passung - zwischen Fräskopf 1 und Frässchaft 2 von den erwähnten, jeweils auf einem Konus oder Kegelmantel liegenden Paßflächen 4 und 5 übernommen wird, und zwar ausschließlich von den Paßflächen 4, 5.

Da die Paßflächen 4, 5 sehr genau hergestellt werden können, - auch und gerade auf dem aus Hartmetall oder dgl. bestehenden Fräskopf 1, und zwar im Fall des Ausführungsbeispiels durch Einschleifen der erwähnten Nut 21- ist dementsprechend die mit einer derart ausgeführten Werkzeugverbindung erreichbare Rundlaufgenauigkeit in bestmöglicher Präzision sowie hoher Belastbarkeit und Dauerhaftigkeit zu erhalten.

Im übrigen ist die erfindungsgemäße Werkzeugverbindung 3 wegen ihrer Kompaktheit und Formgestaltung bei weitem nicht so bruchanfällig wie die bekannten Lösungen für austauschbare, aus Hartmetall bestehende Fräsköpfe an aus Stahl bestehenden Frässchäften.

Zu erwähnen ist noch, daß die Passung zwischen den Paßflächen 4 und 5 durch Wahl entsprechender Winkel der Kegelmantelflächen 16, 17 selbsthemmend ausgeführt werden kann, wie es überdies auch möglich ist, die im Verbindungszustand von Fräskopf 1 und Frässchaft 2 aneinanderliegenden Flanken 19 und 20 der Profilierung 10 bzw. 11 durch Wahl einer entsprechenden Steigung selbsthemmend auszuführen.

Zusammenfassend ist zu sagen, daß die mit der Erfindung erzielbaren Vorteile ihren konstruktiven Grund in der Kombination der für Fräskopf und Frässchaft gewählten, speziellen Profilierung haben; dies bedeutet im wesentlichen, daß bei aneinanderliegenden Paßflächen 4 und 5 von Fräskopf 1 bzw. Frässchaft 2 zwischen den von den Paßflächen 4, 5 jeweils eingeschlossenen, benachbarten (Profil-) Bereichen 8 bzw. 9 ein gewisser Abstand - der erwähnte Abstand x - besteht und garantiert ist, während die unter der Verbindungskraft (Anzugskraft) von Fräskopf 1 und Frässchaft 2 aneinanderliegenden Flanken 19 und 20 der Nut 21 bzw. der Feder 22 im rechten Winkel zu den den Abstand x einschließenden Kegelmantelflächen 12, 13 verlaufen. Damit ist sichergestellt, daß von den Profilierungen 10, 11 keine die Zentrierung des Fräskopfes 1 im Frässchaft 2 beeinflussenden Einwirkungen/Kräfte ausgehen können. - Für den Fräskopf 1 besteht also die konstruktiv garantierte Freiheit, sich 'spielend' an den ,Paßkonus' anzulegen, der durch die Paßfläche 5 des Frässchaftes 2 gebildet ist.

Um ein Einsetzen eines Fräskopfes 1 in den Frässchaft 2 durch eine gewisse Vor-Führung zu erleichtern, weist der Fräskopf 1 an seinem dem Arbeitsbereich 18 abgekehrten Ende einen zylindrischen Zapfen 23 auf, dem im Ende 7 des Frässchaftes 2 eine entsprechende, nur geringes radiales Spiel ermöglichende zylindrische Bohrung (Bohrungsabsatz) 24 zugeordnet ist.

### BEZUGSZEICHENLISTE

- 1: Fräskopf
- 2: Frässchaft
- 3: Werkzeugverbindung
- 4: Paßfläche (am Fräskopf 1)
- 5: Paßfläche (am Frässchaft 2)
- 6: Ende, stopfenartig (am Fräskopf 1)
- 7: Ende, buchsenartig (am Frässchaft 2)
- 8: Bereich, federartig (am Ende 6 des Fräskopfes 1)
- 9: Bereich, nutartig (am Ende 7 des Frässchaftes 2)
- 10: Profilierung (des Endes 6 des Fräskopfes 1)
- 11: Profilierung (des Endes 7 des Frässchaftes 2)
- 12: Kegelmantelfläche (des Bereiches 8/Profilierung 10)
- 13: Kegelmantelfläche (des Bereiches 9/Profilierung 11)
- 14: Flanke (an der Profilierung 10 des Fräskopfes 1)
- 15: Flanke (an der Profilierung 11 des Frässchaftes 2)
- 16: Kegelmantelfläche (der Paßfläche 4 des Fräskopfes 1)
- 17: Kegelmantelfläche (der Paßfläche 5 des Frässchaftes 2)
- 18: Arbeitsbereich (des Fräskopfes 1)
- 19: Flanke (der Profilierung 10)
- 20: Flanke (der Profilierung 11)
- 21: Nut (am Fräskopf 1)
- 22: Feder (am Frässchaft 2)
- 23: Zapfen, zylindrisch
- 24: Bohrung, zylindrisch

- x: Abstand zwischen den Bereichen 8 und 9
- y: Abstand zwischen den Flanken 14 und 15

## Patentansprüche

1. Werkzeugverbindung (3) zum Übertragen einer Drehbewegung von einem Werkzeugschaft (2), insbesondere einem aus Stahl bestehenden Frässchaft, auf einen Werkzeugkopf (1), insbesondere einen aus Hartmetall bestehenden Fräskopf,
a) mit zur Zentrierung und axialen Fixierung des Werkzeugkopfes im Werkzeugschaft in bzw. an diesen vorgesehenen, jeweils auf einer Kegelmantelfläche (16 bzw. 17) liegenden, nach Art eines Paßkonus miteinander korrespondierenden Paßflächen (4, 5), von denen sich die Paßfläche (5) des Werkzeugschaftes in einem buchsenartigen Ende (7) des Werkzeugschaftes befindet, während sich die Paßfläche (4) des Werkzeugkopfes an einem dem Arbeitsbereich (18) des Werkzeugkopfes abgekehrten, stopfenartigen Ende (6) des Werkzeugkopfes befindet,
**dadurch gekennzeichnet,**
b) **daß** die Paßflächen (4, 5) von Werkzeugschaft und Werkzeugkopf von komplementär ausgeführten, jeweils einen an sich bekannten, zumindest im wesentlichen rechteckigen Querschnitt aufweisenden Profilierungen (10, 11) gebildet sind, die spiralwendelartig verlaufend im buchsenartigen Ende (7) des Werkzeugschaftes bzw. am stopfenartigen Ende (6) des Werkzeugkopfes vorgesehen sind,
c) **daß** die Profilierungen (10,11) jeweils einen zur betreffenden Profilierung (10 bzw. 11) komplementären Bereich (8 bzw. 9) einschließen, und
d) **daß** die Profilierungen (10, 11) und die genannten Bereiche (8, 9) derart ausgeführt sind, daß sich durch eine entsprechende Dreh- und Axialbewegung des Werkzeugkopfes relativ zum Werkzeugschaft und daraus resultierendem Ineinandergreifen der Profilierungen (10, 11) eine Endstellung ergibt, in der die Paßflächen (4, 5) aneinanderliegen, während die Bereiche (8, 9) einen in etwa radialer, quer zu der den Bereichen (8, 9) zugeordneten Kegelmantelfläche (12 bzw. 13) verlaufender Richtung erstreckenden geringen Abstand voneinander aufweisen.

2. Werkzeugverbindung nach Anspruch 1, **dadurch gekennzeichnet, daß** die Paßfläche (4) des Werkzeugkopfes vom Boden einer spiralwendelartig verlaufend im Werkzeugkopf vorgesehenen Nut (21) gebildet ist.

3. Werkzeugverbindung nach Anspruch 1, **dadurch gekennzeichnet, daß** die spiralwendelartigen Paßflächen (4, 5) und/oder die von diesen Paßflächen (4, 5) eingeschlossenen Bereiche (8, 9) kontinuierlich verlaufend im Werkzeugschaft bzw. im Werkzeugkopf vorgesehen sind.

4. Werkzeugverbindung nach Anspruch 1, **dadurch gekennzeichnet, daß** die spiralwendelartigen Paßflächen (4, 5) und/oder die von diesen Paßflächen (4, 5) eingeschlossenen Bereiche (8, 9) fragmentartig verlaufend im Werkzeugschaft bzw. im Werkzeugkopf vorgesehen sind.

5. Werkzeugverbindung nach Anspruch 1, **dadurch gekennzeichnet, daß** der Werkzeugschaft eine zylindrische, einer gewissen Vor-Führung dienende Bohrung (24) aufweist, dem ein am Werkzeugkopf befindlicher zylindrischer Zapfen (23) zugeordnet ist, der von der erwähnten Bohrung (24) mit einem vorbestimmten minimalen Spiel aufnehmbar ist.

6. Werkzeugverbindung nach Anspruch 5, **dadurch gekennzeichnet, daß** die Bohrung (24) auf der dem Werkzeugkopf abgekehrten Seite im Werkzeugschaft angeordnet ist.

7. Werkzeugverbindung nach einem der Ansprüche 1 bis 6, **dadurch gekennzeichnet, daß** am Werkzeugkopf Abflachungen vorgesehen sind zum Ansetzen eines Schraubenschlüssels oder dgl..

8. Werkzeugverbindung nach einem der Ansprüche 1 bis 6, **dadurch gekennzeichnet, daß** der Werkzeugkopf, insbesondere Fräskopf, aus Hartmetall oder dgl. besteht, wobei eine spiralwendelartig verlaufende Paßfläche (4) durch Einschleifen einer spiralwendelartig verlaufenden Nut (21) vorbestimmter Tiefe in das dem Arbeitsbereich (18) abgekehrte, konisch ausgebildete Ende des Werkzeugkopfes hergestellt ist.

9. Werkzeugverbindung nach Anspruch 8, **dadurch gekennzeichnet, daß** die spiralwendelartig verlaufende Paßfläche (4) eingängig ausgeführt ist.

## Claims

1. Tool connection (3) for transmitting rotational motion from a tool shank (2), in particular a cutter shank made of steel, to a tool head (1), in particular a cutter head made of cemented carbide,
a) having, for the purpose of centering and axially anchoring the tool head in the tool shaft, mating surfaces (4, 5) provided in or on said tool head or tool shaft, in each case on a cone surface (16, 17), said mating surfaces corresponding to one another in the form of a mating cone, and the mating surface (5) of the tool shank being located in a socket-like end (7) of the tool shank while the mating surface (4) of the tool head is located on a plug-like end (6) of the tool head, said plug-like end (6) facing away from the cutting area (18) of the tool head,
**characterised in that**,
b) the mating surfaces (4, 5) of the tool head and tool shank are formed by complementary profilings (10, 11), each of which is of familiar, at least essentially rectangular cross-section, that are provided in the form of a helix in the socket-like end (7) of the tool shank or on the plug-like end (6) of the tool head,
c) each of the profilings (10, 11) encompasses an area (8 or 9) complementary to the respective profiling (10 or 11), and
d) the profilings (10, 11) and the areas referred to (8, 9) are configured such that, by means of an appropriate rotational and axial movement of the tool head relative to the tool shank and the resulting mutual engagement of the profilings (10, 11), an end position is obtained in which the mating surfaces (4, 5) abut against each other whilst there is a small space between the areas (8, 9), which runs in an approximately radial direction, at right angles to the cone surface (12 or 13) corresponding to the areas (8, 9).

2. Tool connection according to claim 1, **characterised in that** the mating surface (4) of the tool head is formed by the floor of a helical groove (21) provided in the tool head.

3. Tool connection according to claim 1, **characterised in that** the helical mating surfaces (4, 5) and/or the areas (8, 9) encompassed by these mating surfaces (4, 5) run continuously in the tool shank or tool head.

4. Tool connection according to claim 1, **characterised in that** the helical mating surfaces (4, 5) and/or the areas (8, 9) encompassed by these mating surfaces (4, 5) run discontinuously in the tool shank or tool head.

5. Tool connection according to claim 1, **characterised in that** the tool shaft has a cylindrical bore (24) which serves as a preliminary guide means for a matching cylindrical peg (23) located on the tool head, said bore (24) being able to accommodate said peg (23) with a pre-determined minimum degree of play.

6. Tool connection according to claim 5, **characterised in that** the bore (24) is located in the tool shaft at the end opposite the tool-head end.

7. Tool connection according to one of the claims 1 to 6, **characterised in that** flattened areas are provided on the tool head to permit use of a spanner or the like.

8. Tool connection according to one of the claims 1 to 6, **characterised in that** the tool head, in particular a cutter head, consists of cemented carbide or the like, a helical mating surface (4) being produced by grinding a helical groove (21) of pre-determined depth into the tool head at its conically configured end facing away from the cutting area (18).

9. Tool connection according to claim 8, **characterised in that** the helical mating surface (4) is of single-lead configuration.

## Revendications

1. Liaison (3) entre deux parties d'outil pour transmettre un mouvement de rotation d'une tige d'outil (2), en particulier une tige de fraiseuse réalisée en acier, à une tête d'outil (1), en particulier une tête de fraisage réalisée en métal dur,
a) comportant des surfaces d'appui (4, 5) correspondant l'une à l'autre sous la forme d'un cône d'ajustage, lesquelles sont prévues sur ou dans la tige d'outil pour le centrage et la fixation axiale de la tête d'outil dans la tige et sont disposées chacune respectivement sur une paroi latérale conique (16 ou 17) et parmi lesquelles la surface d'appui (5) de la tige d'outil se situe dans une extrémité (7) en forme de douille de la tige d'outil, alors que la surface d'appui (4) de la tête d'outil se situe au niveau d'une extrémité (6) en forme de bouchon de la tête d'outil, détournée de la zone de travail (18) de la tête d'outil,
**caractérisée**
b) **en ce que** les surfaces d'appui (4, 5) de la tige et de la tête de l'outil sont formées par des profilages (10, 11), qui sont réalisés de manière complémentaire et comportent chacun une section connue en soi, au moins sensiblement rectangulaire, et qui sont prévus en forme de spirale s'étendant respectivement dans l'extrémité (7) en forme de douille de la tige d'outil et sur l'extrémité (6) en forme de bouchon de la tête d'outil,
c) **en ce que** les profilages (10, 11) forment respectivement entre eux une zone (8 ou 9) complémentaire du profilage (10 ou 11) concerné, et
d) **en ce que** les profilages (10, 11) et lesdites zones (8, 9) sont réalisés de telle sorte que, sous l'effet d'un mouvement de rotation et un mouvement axial correspondant de la tête d'outil par rapport à la tige d'outil et de l'emboîtement qui en résulte des profilages (10, 11), il se forme une position de fin de course, dans laquelle les surfaces d'appui (4, 5) sont en appui les unes contre les autres, tandis que les zones (8, 9) sont situées l'une par rapport à l'autre à une faible distance qui s'étend transversalement à la direction dans laquelle s'étendent les parois latérales coniques (12 et 13) associées aux zones (8, 9).

2. Liaison entre deux parties d'outil selon la revendication 1, **caractérisée en ce que** la surface d'appui (4) de la tête d'outil est formée par le fond d'une rainure (21) s'étendant en forme de spirale et prévue dans la tête d'outil.

3. Liaison entre deux parties d'outil selon la revendication 1, **caractérisée en ce que** les surfaces d'appui (4, 5) en forme de spirale et/ou les zones (8, 9) enserrées par ces surfaces d'appui (4, 5) sont prévues en s'étendant de façon continue respectivement dans la tige d'outil et dans la tête d'outil.

4. Liaison entre deux parties d'outil selon la revendication 1, **caractérisée en ce que** les surfaces d'appui (4, 5) en forme de spirale et/ou les zones (8, 9) enserrées par ces surfaces d'appui (4, 5) sont prévues en s'étendant par fragments respectivement dans la tige d'outil et dans la tête d'outil.

5. Liaison entre deux parties d'outil selon la revendication 1, **caractérisée en ce que** la tige d'outil comporte une forure (24) cylindrique, qui est destinée à un guidage préliminaire et à laquelle est associé un tenon (23) cylindrique qui est situé dans la tête d'outil et qui peut être reçu avec un jeu minimal prédéfini dans ladite forure (24).

6. Liaison entre deux parties d'outil selon la revendication 5, **caractérisée en ce que** la forure (24) est disposée dans la tige d'outil sur le côté opposé à la tête d'outil.

7. Liaison entre deux parties d'outil selon l'une des revendications 1 à 6, **caractérisée en ce que** des méplats sont prévus sur la tête d'outil pour la pose d'une clé plate ou de tout outil similaire.

8. Liaison entre deux parties d'outil selon l'une des revendications 1 à 6, **caractérisée en ce que** la tête d'outil, en particulier la tête de fraisage, est réalisée en métal dur ou en un matériau similaire, une surface d'appui (4) s'étendant en forme de spirale étant réalisée par le rodage d'une rainure (21) s'étendant en forme de spirale avec une profondeur prédéfinie dans l'extrémité conique, opposée à la zone de travail (18) de la tête d'outil.

9. Liaison entre deux parties d'outil selon la revendication 8, **caractérisée en ce que** la surface d'appui (4) s'étendant en forme de spirale est réalisée à pas simple.
